# EUROPEAN PATENT APPLICATION

(11) **EP 4 535 913 A1**
(43) Date of publication of application: **09.04.2025**
(21) Application number: 23810804.7
(22) Date of filing: 06.05.2023
(51) Int. Cl.: H04W 74/08

(54) **SYSTEM INFORMATION SENDING METHOD AND APPARATUS, AND WIRELESS COMMUNICATION SYSTEM ACCESS METHOD AND APPARATUS**

(30) Priority: 27.05.2022 CN 202210591046
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Deambrogi, Edgardo
(86) International application number: PCT/CN2023/092577
(87) International publication number: WO 2023/226731

(57) **Abstract**

Provided in the embodiments of the present disclosure are a system information sending method and apparatus, and a wireless communication system access method and apparatus. The system information sending method comprises: dividing system information blocks of a wireless communication system into a first set and at least one second set, wherein the wireless communication system supports the multiple different types of networks, the first set comprises basic system information blocks, and the second set comprises at least one of the following: system information blocks corresponding to at least one type of network, and system information blocks corresponding to at least one type of second node; and a first node sending first system information to the second node by means of a downlink channel, wherein the first system information comprises at least one system information block in the second set. **In** the present disclosure, the problem in the related art of it being impossible to efficiently utilize resources of a wireless communication system due to there being no system information sending method for a terminal type is solved.

## Description

### Cross-Reference to Related Application

The present disclosure is based on and claims priority to Chinese Patent Application No. CN202210591046.X, filed on May 27, 2022, and entitled "System Information Sending Method and Apparatus, and Wireless Communication System Access Method and Apparatus", the disclosure of which is incorporated herein by reference in its entirety.

### Technical Field

Embodiments of the present disclosure relate to the field of communications, and in particular, to a system information sending method and apparatus, and a wireless communication system access method and apparatus.

### Background

Large-scale commercialization of the 5th Generation Mobile Communication System (5G) New Radio (NR) is accelerating the transformation of society and economy towards digitalization, networking, and intelligence, and propelling a network into a new era of connectivity for all things. The rapidly emerging application requirements in smart cities, intelligent transportation, and smart industrial production drive continuous enhancement of development trends of differentiated network device capabilities, diversified network functions, and intelligent network management, which further promotes arrival of the 6th Generation Mobile Communication System (6G), which is characterized by intelligent connectivity. In the 5G NR system, system information is transmitted by firstly transmitting a Master Information Block (MIB) on a Physical Broadcast Channel (PBCH) within a Synchronization Signal/Physical Broadcast Channel Block (SSB), and then transmitting a System Information Block (SIB) on a Physical Downlink Shared Channel (PDSCH). The SIB may be divided into multiple blocks respectively carrying different system information.

In typical 6G application scenarios such as smart cities, intelligent transportation, and smart homes, there are a large number of intelligent automated devices with highly differentiated capabilities that demand extremely low latency, extremely high reliability, ultra-wide bandwidth, and massive connectivity. Applications of intelligent automation types also propose high precision and high resolution demands on perception capabilities. In other words, in the 6G era, the types of terminals accessing the system will become extremely diverse, and broadcasting the system information using the MIB+SIB method of NR will severely affect system spectral efficiency and also increase the burden on terminals, as different types of terminals require varying levels of detail and varying frequencies of system information. The rapid increase in wireless communication and perception devices makes the contradiction between the endless growth of service demands and the limited wireless resources and computing power more prominent. On the other hand, the realization of the 6G vision requires closed-loop information flow processing that includes the acquisition of environmental perception information, information interaction and sharing, intelligent information processing, and the distribution of control information (including control information for communication networks and control commands for application execution devices). The existing wireless network architecture and related technologies are no longer sufficient to meet the emerging application demands of the post-5G (5G and Beyond, B5G)/6G era. There is an urgent need to develop new network architectures and enabling technologies that efficiently utilize resources and intelligently adapt to differentiated applications. A system information sending method specific to terminal types is needed.

### Summary

Embodiments of the present disclosure provide a system information sending method and apparatus, and a wireless communication system access method and apparatus, which may at least solve the problem in the related art that wireless communication system resources cannot be efficiently used due to the absence of a system information sending method specific to terminal types.

According to some embodiments of the present disclosure, provided is a system information sending method, including: dividing system information blocks of a wireless communication system into a first set and at least one second set, wherein the wireless communication system supports multiple different types of networks, the first set includes one or more basic system information blocks, and the second set includes at least one of: system information blocks corresponding to at least one type of networks, and system information blocks corresponding to at least one type of second nodes; and sending, by a first node, first system information to a second node via a downlink channel, wherein the first system information includes at least one system information block in the second set.

According to another embodiment of the present disclosure, also provided is a wireless communication system access method, including: receiving, by a first sub-node of a wireless communication system, third information sent by a second sub-node; and detecting, by the first sub-node, the third information, and in a case where a third condition is satisfied, establishing, by the first sub-node, a connection with the second sub-node.

According to still another embodiment of the present disclosure, also provided is a system information sending apparatus, including: a set division module, configured to divide system information blocks of a wireless communication system into a first set and at least one second set, wherein the wireless communication system supports multiple different types of networks, the first set includes one or more basic system information blocks, and the second set includes at least one of: system information blocks corresponding to at least one type of networks, and system information blocks corresponding to at least one type of second nodes; and a sending module, configured to send, by a first node, first system information to a second node via a downlink channel, wherein the first system information includes at least one system information block in the second set.

According to yet another embodiment of the present disclosure, also provided is a wireless communication system access apparatus, including: a reception module, configured to receive third information sent by a second sub-node; a detection and determination module, configured to detect the third information received by the reception module, determine whether a third condition is satisfied, and send a determination result to a first connection module; and the first connection module, configured to establish, in a case where the third condition is satisfied, a connection between a first sub-node and the second sub-node according to the determination result of the detection and determination module.

According to yet another embodiment of the present disclosure, also provided is a computer readable storage medium. The computer readable storage medium stores a computer program, and the computer program, when executed by a processor, causes the processor to implement the operations in any one of the method embodiments.

According to yet another embodiment of the present disclosure, also provided is an electronic apparatus, including a memory, a processor, and a computer program that is stored on the memory and is able to run on the processor, wherein the processor is configured to run the computer program to implement the operations in any one of the method embodiments.

### Brief Description of the Drawings

Fig. 1 is a block diagram illustrating the hardware structure of a mobile second node of a system information sending method according to some embodiments of the present disclosure;
Fig. 2 is a diagram illustrating the system network architecture of a system information sending method according to some embodiments of the present disclosure;
Fig. 3 is a flowchart of a system information sending method according to some embodiments of the present disclosure;
Fig. 4 is a flowchart of a system information sending method according to some embodiments of the present disclosure;
Fig. 5 is a flowchart of a system information sending method according to some embodiments of the present disclosure;
Fig. 6 is a flowchart of customized network construction according to some embodiments of the present disclosure;
Fig. 7 is a flowchart of a wireless communication system access method according to some embodiments of the present disclosure;
Fig. 8 is a flowchart of a wireless communication system access method according to some embodiments of the present disclosure;
Fig. 9 is a flowchart of a wireless communication system access method according to some embodiments of the present disclosure;
Fig. 10 is a flowchart of a wireless communication system access method according to some embodiments of the present disclosure;
Fig. 11 is a structure block diagram of a system information sending apparatus according to some embodiments of the present disclosure;
Fig. 12 is a structural block diagram of a system information sending apparatus according to some embodiments of the present disclosure;
Fig. 13 is a structural block diagram of a wireless communication system access apparatus according to some embodiments of the present disclosure;
Fig. 14 is a structural block diagram of a wireless communication system access apparatus according to some embodiments of the present disclosure;
Fig. 15 is a flowchart of a network architecture configuration method based on user types according to a scenario-based embodiment of the present disclosure;
Fig. 16 is a flowchart of a system information sending method according to a scenario-based embodiment of the present disclosure;
Fig. 17 is a flowchart of a terminal-assisted system access method according to a scenario-based embodiment of the present disclosure; and
Fig. 18 is a flowchart of a terminal-assisted system access method according to a scenario-based embodiment of the present disclosure.

### Detailed Description of the Embodiments

Embodiments of the present disclosure will be described below in detail with reference to the accompanying drawings and in conjunction with embodiments.

It should be noted that, terms such as "first" and "second" in the specification, claims, and accompanying drawings of the present disclosure are used to distinguish similar objects, but are not necessarily used to describe a specific sequence or order.

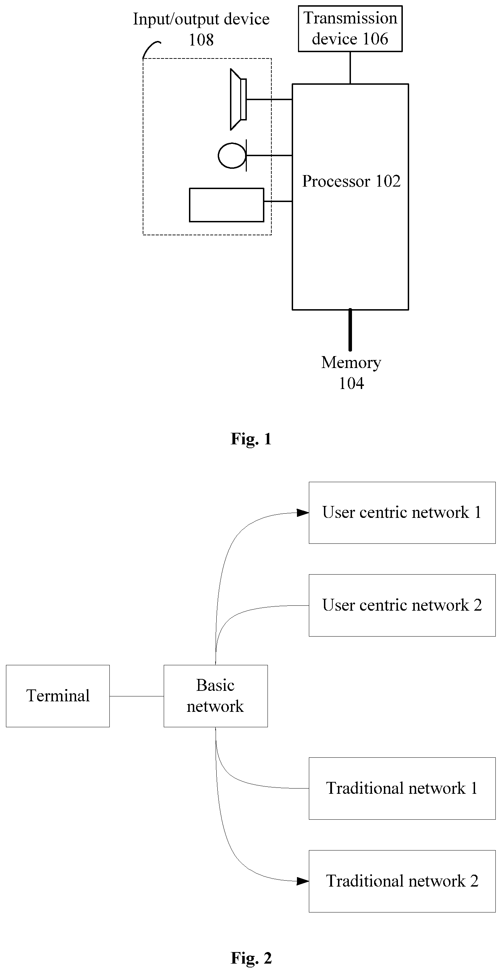

The method embodiments provided in the embodiments of the present disclosure may be executed in a specific to terminal types, a second computer node or a similar arithmetic device. Taking the operation on the specific to terminal types as an example, Fig. 1 is a block diagram illustrating the hardware structure of a mobile second node of a system information sending method according to some embodiments of the present disclosure. As shown in Fig. 1, the specific to terminal types may include one or more (only one is shown in Fig. 1) processors 102 (each of the one or more processors 102 may include, but is not limited to, a processing apparatus such as a microprocessor (e.g., a Micro Controller Unit (MCU)) or a programmable logic device (e.g., a Field Programmable Gate Array (FPGA))) and a memory 104 for storing data. The specific to terminal types may further include a transmission device 106 providing a communication function and an input/output device 108. Those having ordinary skill in the art may understand that the structure shown in Fig. 1 is merely exemplary, which does not limit the structure of the specific to terminal types. For example, the mobile second node may also include more or fewer components than shown in Fig. 1, or have a different configuration than that shown in Fig. 1.

The memory 104 may be used for storing a computer program, for example, a software program and a module of application software, such as a computer program corresponding to the system information sending method in the embodiments of the present disclosure. The one or more processors 102 run the computer program stored in the memory 104, so as to execute various functional applications and data processing, i.e., to realize the described method. The memory 104 may include a high-speed random access memory, and may also include a non-volatile memory, such as one or more magnetic storage devices, flash memory, or other non-volatile solid-state memory. In some examples, the memory 104 may further include a memory remotely located with respect to the one or more processors 102 and connected to the mobile second node over a network. Examples of such network include, but are not limited to, the Internet, intranets, local area networks, mobile communication networks, and combinations thereof.

The transmission device 106 is configured to receive or transmit data via a network. Some specific examples of the above-described network may include a wireless network provided by a communication provider of the mobile second node. In an example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

The solution of the embodiments of the present disclosure may be implemented on the system network architecture shown in Fig. 2. As shown in Fig. 2, the system network architecture includes a terminal, a basic network, a traditional network 1 (for example, a Fifth Generation (5G) New Radio (NR) system), a traditional network 2 (for example, a Fourth Generation (4G) Narrow Band Internet of Things (NB-IoT) network), and two user-centric customized networks (including a user-centric network 1 and a user-centric network 2). In this architecture, the basic network supports multiple different types of networks (i.e., the traditional network 1, the traditional network 2, the user-centric network 1, and the user-centric network 2). The terminal first accesses the basic network. Then, the basic network selects a network that matches the accessed terminal based on information such as a terminal type. Afterwards, system information is sent in a specific manner.

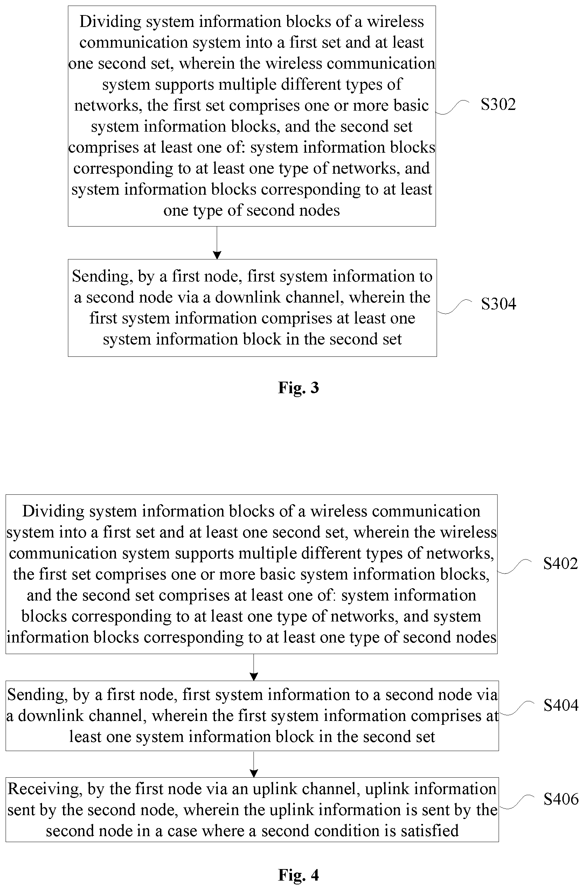

In the present embodiment, there is provided a system information sending method which may be implemented on the described specific to terminal types or the described system network architecture. Fig. 3 is a flowchart of a system information sending method according to some embodiments of the present disclosure. As shown in Fig. 3, the flow includes the following operations S302 and S304.

In operation S302, system information blocks of a wireless communication system are divided into a first set and at least one second set, wherein the wireless communication system supports multiple different types of networks, the first set includes one or more basic system information blocks, and the second set includes at least one of: system information blocks corresponding to at least one type of networks, and system information blocks corresponding to at least one type of second nodes.

In operation S304, a first node sends first system information to a second node via a downlink channel, wherein the first system information includes at least one system information block in the second set.

By means of the described operations, system information blocks of a wireless communication system are divided into a first set and at least one second set, a first node sends first system information to a second node via a downlink channel, wherein the wireless communication system supports multiple different types of networks. The system information sending method solves the problem in the related art that there is no system information sending method specific to terminal types, and achieves the effect of efficiently using wireless communication system resources.

Those having ordinary skill in the art should know that the foregoing operations may be, but are not limited to be, executed by a base station, a mobile second node, a terminal, and the like.

Those having ordinary skill in the art should know that the first node and the second node involved in the foregoing operations are both representative nouns, where the first node may be a base station or a network side node, and the second node may be a terminal or another system or apparatus that is able to run and implement the method, which is not limited herein.

Those having ordinary skill in the art should know that the basic system information blocks involved in the above operations refer to the necessary system information for different types of terminals (or different types of mobile second nodes) to access the wireless communication system. A network indicated by the basic system information block may be referred to as a basic network, and the basic network may be an existing type of network or a customized network. The basic network is used for enabling different types of terminals to access the wireless communication system first, so that the different types of terminals, by subsequently receiving system information blocks in the second set, may be allocated to different networks that match the different types of terminals.

In an exemplary embodiment, the multiple different types of networks may include at least one of: an existing network; and a customized network.

When searching for a network that matches the second node, the first node first searches in the existing networks, and in a case where the searching fails, that is, no network that matches the second node is found in the existing networks, the first node needs to construct a new network, that is, a customized network that matches the second node. During a subsequent system information sending process, when a new second node or a third node needs to match a network in the first node, the first node also searches in the existing networks, wherein the existing networks includes the existing networks initially provided and the customized network subsequently constructed, and in a case where none of these existing networks has a network that matches the new second node or the third node, the first node needs to construct a new network.

The existing networks may be pre-configured/stored networks based on various architectures such as a 4G Long Term Evolution (LTE) network architecture, a 4G NB-IoT network architecture, a 4G Machine-Type Communication (MTC) network architecture, and a 5G NR network architecture. The customized network may be a communication network constructed in order to satisfy specific communication requirements of one or more types of terminals, or a communication network constructed by adjusting the configuration of an existing network on the basis of an existing type of network in order to satisfy specific communication requirements of one or more types of terminals.

The network that matches the second node may be a network that matches the type of the second node or a network that matches a network type required by the second node.

The first system information involved in the above embodiments is information from a first system information block set, wherein the first system information block set at least includes system information blocks in the second set. The first system information block set may further include a basic system information block in the first set. Further, the first system information block set is divided into one or more subsets, and the first system information is at least one subset of the one or more subsets. Further, the subset division mode of the first system information block set may be based on information such as a terminal type and a service type applied for by the terminal. Further, the subset division mode of the first system information block set may be sent from the first node (may be a network side node) to the second node (may be a terminal) or may be stored in the second node (may be the terminal) as default configuration.

In an exemplary embodiment, the operation that the first node sends the first system information to the second node via the downlink channel includes: the first node sends, in a case where a first condition is satisfied, the first system information to the second node via the downlink channel.

The first condition includes at least one of following conditions: the first node detects, on an uplink channel, uplink information sent by the second node; the first node detects, on an uplink channel, that a measurement result of uplink information sent by the second node is greater than or equal to a threshold; the first node receives first system information sending request information from the second node.

In an exemplary embodiment, the first node sends, to the second node via a downlink channel, at least one of a sending start time, a sending period and a sending frequency of the first system information.

The information such as the sending start time, the sending period, and the sending frequency of the first system information may be sent to the second node together with the first system information. Alternatively, the information such as the sending start time, the sending period, and the sending frequency of the first system information may be sent after the sending of the first system information is completed. Furthermore, those having ordinary skill in the art should know that a downlink channel for sending the sending start time, the sending period, and the sending frequency of the first system information and a downlink channel for sending the first system information may be a same downlink channel, and may also be different downlink channels, which is not limited herein.

In an exemplary embodiment, after the first node sends the first system information to the second node via the downlink channel, the system information sending method may further include: the first node receives, via an uplink channel, uplink information sent by the second node, wherein the uplink information is sent by the second node in a case where a second condition is satisfied, and the second condition at least includes one of following conditions: the second node does not receive first system information that matches the second node; after the second node sends the uplink information, the second node does not receive, within a determined duration, first system information that is sent by the first node and matches the second node; after the second node receives a basic system information block in the first set, the basic system information block does not indicate transmission resource configuration information corresponding to first system information that matches the second node; the second node enters a connected mode from an idle mode; a system resource block updating moment of the second node arrives. Fig. 4 is a flowchart of a system information sending method according to some embodiments of the present disclosure. As shown in Fig. 4, the flow includes the following operations S402 to S406.

In operation S402, system information blocks of a wireless communication system are divided into a first set and at least one second set, wherein the wireless communication system supports multiple different types of networks, the first set includes one or more basic system information blocks, and the second set includes system information blocks.

In operation S404, a first node of the wireless communication system sends first system information to a second node via a downlink channel, wherein the first system information includes at least one system information block in the second set.

In operation S406, the first node receives, via an uplink channel, uplink information sent by the second node, wherein the uplink information is sent by the second node in a case where a second condition is satisfied.

In one exemplary embodiment, after the second node accesses the wireless communication system according to a basic system information block of the first set, the first node receives first information reported by the second node. The first node receives the first information reported by the second node before the first node sends the first system information to the second node via the downlink channel.

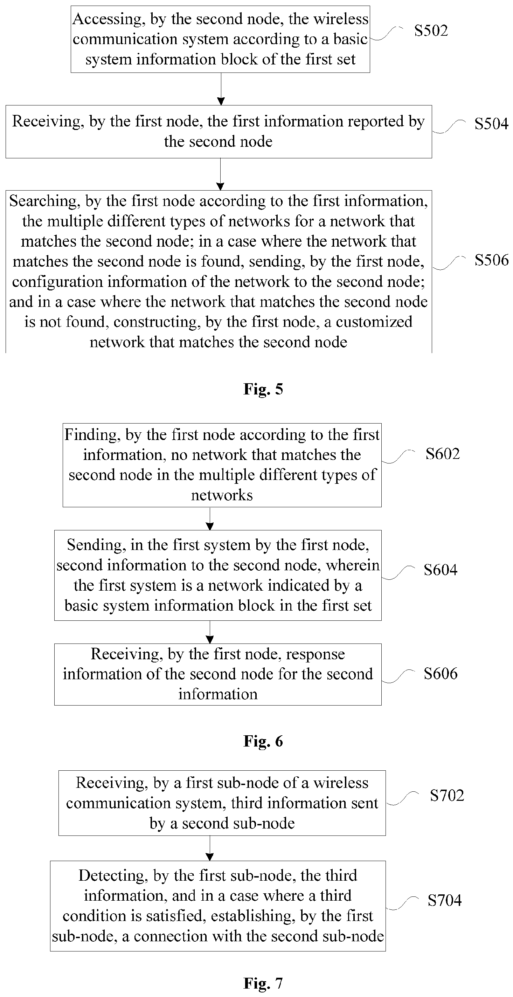

In an exemplary embodiment, after the first node receives the first information reported by the second node, the system information sending method further includes: the first node searches a network that matches the second node from the multiple different types of networks according to the first information; in a case where the network that matches the second node is found, the first node sends configuration information of the network to the second node through the first system information; and in a case where the network that matches the second node is not found, the first node constructs a customized network that matches the second node. Fig. 5 is a flowchart of a system information sending method according to some embodiments of the present disclosure. As shown in Fig. 5, the flow includes the following operations S502 to S506.

In operation S502, the second node accesses the wireless communication system according to a basic system information block of the first set.

In operation S504, the first node receives the first information reported by the second node.

In operation S506, the first node searches, according to the first information, the multiple different types of networks for a network that matches the second node; in a case where the network that matches the second node is found, the first node sends configuration information of the network to the second node; and in a case where the network that matches the second node is not found, the first node constructs a customized network that matches the second node.

In an exemplary embodiment, the first information includes at least one of: a service type required by the second node; a supported function of the first node required by the second node; hardware configuration information of the second node; a codec scheme required by the second node; a receiver detection algorithm required by the second node; and information of a communication protocol version supported by the second node.

In an exemplary embodiment, before the first node constructs the customized network that matches the second node, the system information sending method may further include: the first node sends, in a first system, second information to the second node, wherein the first system is a network indicated according to a basic system information block of the first set; and the first node receives response information of the second node for the second information. Fig. 6 is a flowchart of customized network construction according to some embodiments of the present disclosure. As shown in Fig. 6, the flow includes the following operations S602 to S606.

In operation S602, the first node does not find the network that matches the second node in the multiple different types of networks according to the first information.

In operation S604, the first node sends, in the first system, second information to the second node, wherein the first system is a network indicated by a basic system information block in the first set.

In operation S606, the first node receives response information of the second node for the second information.

In an exemplary embodiment, the second information includes at least one of: indication information of construction of the customized network; waiting delay information of construction of the customized network; and payment information of construction of the customized network.

Another embodiment of the present disclosure provides a wireless communication system access method that is able to operate on the mobile second node or the system network architecture. Fig. 7 is a flowchart of a wireless communication system access method according to some embodiments of the present disclosure. As shown in Fig. 7, the flow includes the following operations S702 and S704.

In operation S702, a first sub-node of a wireless communication system receives third information sent by a second sub-node.

In operation S704, the first sub-node detects the third information, and in a case where a third condition is satisfied, the first sub-node establishes a connection with the second sub-node.

In an exemplary embodiment, the third information includes at least one of: whether the second sub-node allows other sub-nodes to establish a connection with the second sub-node; whether the second sub-node has accessed the wireless communication system.

In an exemplary embodiment, the third condition includes at least one of following conditions: a detection result of the third information is greater than or equal to a threshold; the second sub-node has accessed the wireless communication system.

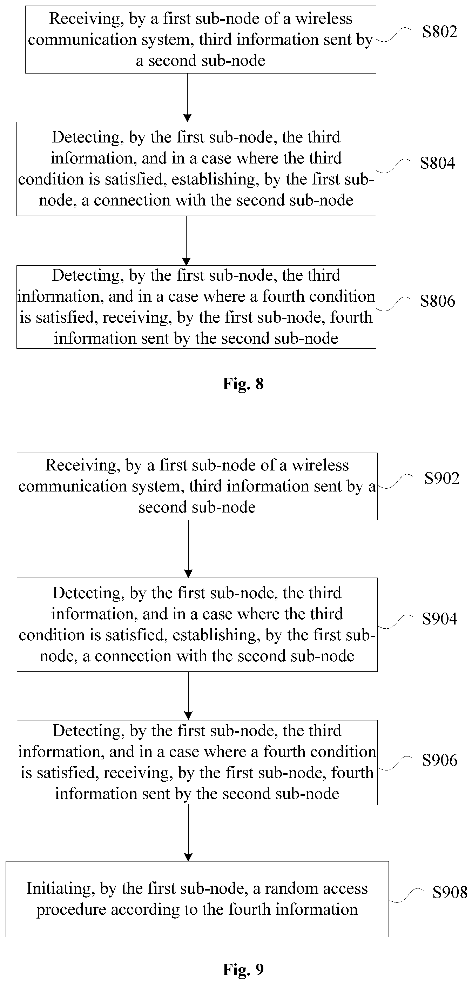

In an exemplary embodiment, after the first sub-node of the wireless communication system receives the third information sent by the second sub-node, the wireless communication system access method further includes: the first sub-node detects the third information, and in a case where a fourth condition is satisfied, the first sub-node receives fourth information sent by the second sub-node. Fig. 8 is a flowchart of a wireless communication system access method according to some embodiments of the present disclosure. As shown in Fig. 8, the flow includes the following operations S802 to S806.

In operation S802, a first sub-node of a wireless communication system receives third information sent by a second sub-node.

In operation S804, the first sub-node detects the third information, and in a case where the third condition is satisfied, the first sub-node establishes a connection with the second sub-node.

In operation S806, the first sub-node detects the third information, and in a case where a fourth condition is satisfied, the first sub-node receives fourth information sent by the second sub-node.

In an exemplary embodiment, the fourth condition includes at least one of following conditions: identification information of the first sub-node is authenticated and/or authorized and/or registered through the wireless communication system; the wireless communication system allows the second sub-node to send a part or all of system information of the wireless communication system to the first sub-node.

In an exemplary embodiment, the fourth information includes at least one of: a part or all of system information of the wireless communication system accessed by the second sub-node; timing advance information of the second sub-node in the wireless communication system; distance information between the second sub-node and a first node of the wireless communication system; transmitting power information of the second sub-node; identity authentication information of the second sub-node in the wireless communication system.

In an exemplary embodiment, after the first sub-node receives the fourth information sent by the second sub-node, the wireless communication system access method may further include: the first sub-node initiates a random access procedure according to the fourth information. Fig. 9 is a flowchart of a wireless communication system access method according to some embodiments of the present disclosure. As shown in Fig. 9, the flow includes the following operations S902 to S908.

In operation S902, a first sub-node of a wireless communication system receives third information sent by a second sub-node.

In operation S904, the first sub-node detects the third information, and in a case where the third condition is satisfied, the first sub-node establishes a connection with the second sub-node.

In operation S906, the first sub-node detects the third information, and in a case where a fourth condition is satisfied, the first sub-node receives fourth information sent by the second sub-node.

In operation S908, the first sub-node initiates a random access procedure according to the fourth information.

In an exemplary embodiment, after the first sub-node receives the fourth information sent by the second sub-node, the wireless communication system access method may further include: the first sub-node receives fifth information sent by the second sub-node, and the first sub-node sends uplink information according to the fifth information.

In an exemplary embodiment, the fifth information includes at least one of: uplink channel scheduling information; configuration information of a non-contention-based random access channel.

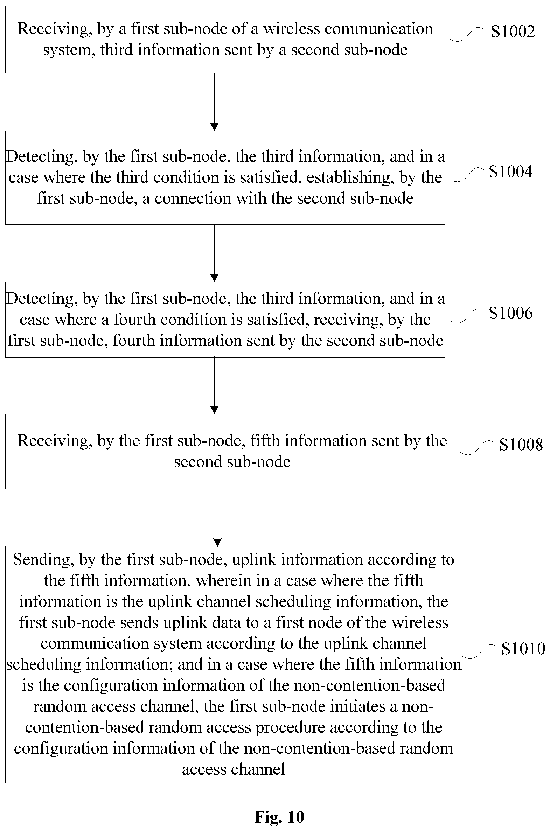

In an exemplary embodiment, the operation that the first sub-node sends the uplink information according to the fifth information includes: in a case where the fifth information is the uplink channel scheduling information, the first sub-node sends uplink data to a first node of the wireless communication system according to the uplink channel scheduling information; and in a case where the fifth information is the configuration information of the non-contention-based random access channel, the first sub-node initiates a non-contention-based random access procedure according to the configuration information of the non-contention-based random access channel. Fig. 10 is a flowchart of a wireless communication system access method according to some embodiments of the present disclosure. As shown in Fig. 10, the flow includes the following operations S1002 to S1010.

In operation S1002, a first sub-node of a wireless communication system receives third information sent by a second sub-node.

In operation S1004, the first sub-node detects the third information, and in a case where the third condition is satisfied, the first sub-node establishes a connection with the second sub-node.

In operation S1006, the first sub-node detects the third information, and in a case where a fourth condition is satisfied, the first sub-node receives fourth information sent by the second sub-node.

In operation S 1008, the first sub-node receives fifth information sent by the second sub-node.

In operation S1010, the first sub-node sends uplink information according to the fifth information, wherein in a case where the fifth information is the uplink channel scheduling information, the first sub-node sends uplink data to a first node of the wireless communication system according to the uplink channel scheduling information; and in a case where the fifth information is the configuration information of the non-contention-based random access channel, the first sub-node initiates a non-contention-based random access procedure according to the configuration information of the non-contention-based random access channel.

Those having ordinary skill in the art should know that the description of the first sub-node and the second sub-node is a representative description, and the first sub-node and the second sub-node may be terminals or other systems or apparatuses that may run to implement the foregoing methods, where the first sub-node and the second sub-node may be nodes of the same type (for example, the same type of terminals) or nodes of different types (for example, different types of terminals).

Through the description of the foregoing embodiments, those having ordinary skill in the art may clearly understand that the methods according to the foregoing embodiments may be implemented by software in addition to a necessary universal hardware platform, and definitely may also be implemented by hardware. Based on such understanding, the essence of the technical solutions of the present disclosure or the part contributing to the related art may be embodied in the form of a software product. The computer software product is stored in a storage medium (such as a Read-Only Memory (ROM)/Random Access Memory (RAM), a magnetic disk, or an optical disk), and includes several instructions for instructing a second node device (which may be a mobile phone, a computer, a server, or a network device) to execute the methods described in the embodiments of the present disclosure.

Another embodiment of the present disclosure further provides a system information sending apparatus. The system information sending apparatus is used for implementing the described embodiments, and what has been described will not be elaborated. The term "module", as used hereinafter, is a combination of software and/or hardware capable of realizing a predetermined function. Although the system information sending apparatus described in the following embodiments is implemented by software, implementation by hardware or a combination of software and hardware is also possible and conceived.

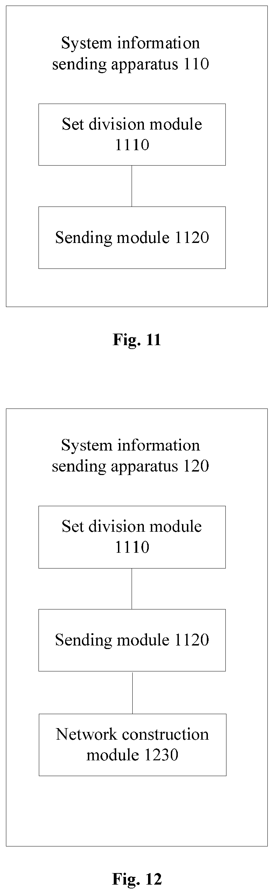

Fig. 11 is a structure block diagram of a system information sending apparatus according to some embodiments of the present disclosure. As shown in Fig. 11, the system information sending apparatus 110 includes: a set division module 1110, configured to divide system information blocks of a wireless communication system into a first set and at least one second set, wherein the wireless communication system supports multiple different types of networks, the first set includes one or more basic system information blocks, and the second set includes at least one of: system information blocks corresponding to at least one type of networks, and system information blocks corresponding to at least one type of second nodes; and a sending module 1120, configured to send, by a first node, first system information to a second node via a downlink channel, wherein the first system information includes at least one system information block in the second set.

Fig. 12 is a structural block diagram of a system information sending apparatus according to some embodiments of the present disclosure. As shown in Fig. 12, in an exemplary embodiment, the system information sending apparatus 120 may further include: a network construction module 1230, configured to construct, by the first node in a case where a network that matches the second node is not found in the multiple different types of networks, a customized network that matches the second node.

The present embodiment further provides a wireless communication system access apparatus, which is used for implementing the described embodiments, and what has been described will not be elaborated. The term "module", as used hereinafter, is a combination of software and/or hardware capable of realizing a predetermined function. Although the wireless communication system access apparatus described in the following embodiments is implemented by software, implementation by hardware or a combination of software and hardware is also possible and conceived.

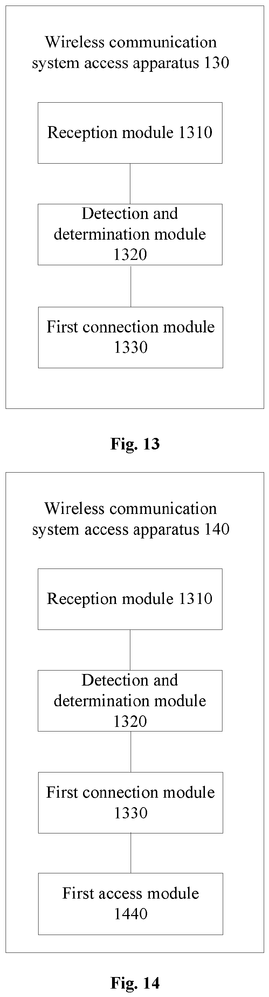

Fig. 13 is a structural block diagram of a wireless communication system access apparatus according to some embodiments of the present disclosure. As shown in Fig. 13, the wireless communication system access apparatus 130 includes: a reception module 1310, configured to receive third information sent by a second sub-node; a detection and determination module 1320, configured to detect the third information received by the reception module, determine whether a third condition is satisfied, and send a determination result to a first connection module; and a first connection module 1330, configured to establish, in a case where the third condition is satisfied, a connection between a first sub-node and the second sub-node according to the determination result of the detection and determination module.

In an exemplary embodiment, the detection and determination module is further configured to detect the third information received by the reception module, and determine whether a fourth condition is satisfied, wherein the reception module is configured to receive, in a case where the fourth condition is satisfied, fourth information sent by the second sub-node.

Fig. 14 is a structural block diagram of a wireless communication system access apparatus according to some embodiments of the present disclosure. As shown in Fig. 14, in an exemplary embodiment, the wireless communication system access apparatus 140 not only includes all the modules shown in Fig. 13, but also includes: a first access module 1440, configured to initiate a random access procedure of the first sub-node according to the fourth information.

It should be noted that each module may be implemented by software or hardware. The latter may be implemented in the following manner, but is not limited thereto. All the modules are located in a same processor; alternatively, the modules are located in different processors in an arbitrary combination.

By means of the described embodiments, not only can the system information sending method of the present disclosure be implemented, but also different types of second nodes (which may be different types of terminals) can be applicable to the described system information sending method; not only can the wireless communication system access method of the present disclosure be implemented, but also different types of second nodes (which may be different types of terminals) can be applicable to the described wireless communication system access method. Those having ordinary skill in the art should know that it is not necessary to send information after the wireless communication system is accessed, and the system information may be sent when necessary.

Embodiments of the present disclosure also provide a computer readable storage medium. The computer readable storage medium stores a computer program, and the computer program, when executed by a processor, causes the processor to implement the operations in any one of the described method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

Embodiments of the present disclosure further provide an electronic apparatus, including a memory and a processor, a computer program is stored on the memory, and the processor is configured to run the computer program to implement the operations in any one of the method embodiments.

In an exemplary embodiment, the electronic apparatus may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure may be implemented by a universal computing device, and the modules or operations may be concentrated on a single computing device or distributed on a network formed by a plurality of computing devices, and may be implemented by program codes executable for the computing devices, so that the modules or operations may be stored in a storage device for execution with the computing devices. The shown or described operations may be executed in sequences different from those described here in some cases, or may form each integrated circuit module respectively, or multiple modules or operations therein may form a single integrated circuit module for implementation. As such, the present disclosure is not limited to any particular hardware and software combination.

To make those having ordinary skill in the art better understand the technical solutions of the present disclosure, the following describes the technical solutions with reference to specific scenario-based embodiments.

In a 5G NR system, a terminal receives a Synchronization Signal/Physical Broadcast Channel Block (SSB) from a Transmit-Receive Point (TRP, which is a new name for a base station in 5G). The SSB may be sent in a multi-beam manner, that is, the SSB information may be sent in different beam directions. The SSB includes a Primary Synchronization Signal (PSS), a Secondary Synchronization Signal (SSS), and a Physical Broadcast Channel (PBCH).

In a scenario-based embodiment of the present disclosure, in order to clearly describe the technical solution, the first node in the described embodiments is embodied as a network side (e.g., a base station), the second node in the described embodiments is embodied as a terminal, the first sub-node in the described embodiments is embodied as a terminal of a first type, and the second sub-node in the described embodiments is embodied as a terminal of a second type. Those having ordinary skill in the art should know that this is merely an implementation, and is not a specific limitation on the methods and apparatuses involved in the described embodiments. During the practical operation and implementation process, the described nodes may be embodied as or implemented by any system or apparatus capable of running to implement the described methods.

### Scenario-based embodiment 1

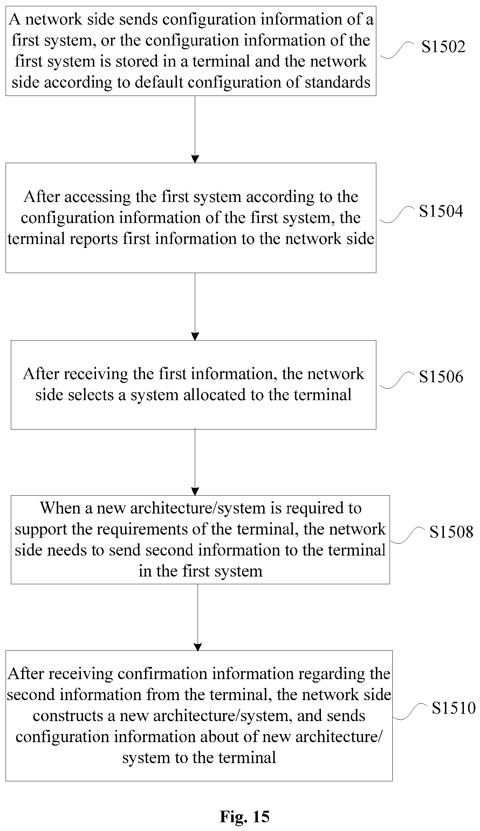

Fig. 15 is a flowchart of a network architecture configuration method based on user types according to a scenario-based embodiment of the present disclosure. As shown in Fig. 5, the method includes the following operations S1502 to S1510.

In operation S1502, a network side sends configuration information of a first system, or the configuration information of the first system is stored in a terminal and the network side according to default configuration of standards.

In operation S1504, after accessing the first system according to the configuration information of the first system, the terminal reports first information to the network side. The first information includes at least one of: a service type required by the terminal (including an access delay requirement, a peak rate requirement, an average rate requirement, and the like), a supported function of the network side required by the terminal, hardware configuration information of the terminal (including a maximum transmitting power requirement and antenna configuration information, etc.), a coding and decoding scheme required by the terminal, a receiver detection algorithm required by the terminal, and information of a (wireless and/or wired) communication protocol version supported by the terminal.

In operation S1506, after receiving the first information, the network side selects a system allocated to the terminal according to the following principles, including: (1) firstly, finding an existing architecture/system matching the first information of the UE in the existing architecture/system supported by the network side, and sending configuration information of the corresponding existing architecture/system to the terminal; (2) in a case where there is no existing architecture/system which can satisfy the requirements of the terminal, the network side constructs a new architecture/system to support the requirements of the terminal.

In operation S1508, when a new architecture/system is required to support the requirements of the terminal, the network side needs to send second information to the terminal in the first system, wherein the second information includes at least one of:
(1) indication information indicating the need for a new architecture/system;
(2) waiting delay information of the new architecture/system;
(3) payment information for the new architecture/system.

In operation S1510, after receiving confirmation information regarding the second information from the terminal, the network side constructs a new architecture/system, and sends configuration information about of new architecture/system to the terminal.

The above operations will be described below in conjunction with exemplary embodiments.

There is a basic network and a large number of different types of terminals in a wireless system. In this embodiment, the types of terminals include: terminals of a first type (terminals with a requirement of high data transmission rate and a requirement of low transmission delay); terminals of a second type (terminals with a requirement of low data transmission rate and a requirement of high transmission delay); terminals of a third type (terminals with a requirement of ultra high data transmission rate and a requirement of ultra low transmission delay, for 24 hour service assurance). These three types of terminals first connect to the system through the basic network in the system, and send their requirements to the network side.

The network side allocates the terminal to a network matching the requirement of the terminal according to the requirement of the terminal. As shown in Fig. 2, the system includes a traditional network 1 (for example, a 5G NR system), a traditional network 2 (for example, a 4G NB-IoT network) and two user-centric customized networks.

A terminal of the first type (a terminal with a requirement of high data transmission rate and a requirement of low transmission delay) is allocated to a 5G NR system, the network side sends configuration information of the 5G NR system to the terminal of the first type via the basic network, and after receiving the configuration information of the 5G NR system, the terminal of the first type attempts to access the 5G NR system.

A terminal of the second type (a terminal with a requirement of low data transmission rate and a requirement of high transmission delay) is allocated to a 4G NB-IoT system, the network side sends configuration information of the 4G NB-IoT system to the terminal of the second type via the basic network, and after receiving the configuration information of the 4G NB-IoT system, the terminal of the second type attempts to access the 4G NB-IoT system.

As for a terminal of the third type (a terminal with a requirement of ultra high data transmission rate and a requirement of ultra low transmission delay, for 24 hour service assurance), because the system does not has a network supporting the requirement of the terminal of the third type, the system sends customized network request information to the terminal of the third type, and the customized network request information further includes information such as waiting delay information of the customized network and payment information of the customized network, and the like. After the terminal of the third type confirms the customized network request information sent by the system, the system sends configuration information of the system for the customized network to the terminal of the third type, and after receiving the configuration information of the system, the terminal of the third type attempts to access the system.

### Scenario-based embodiment 2

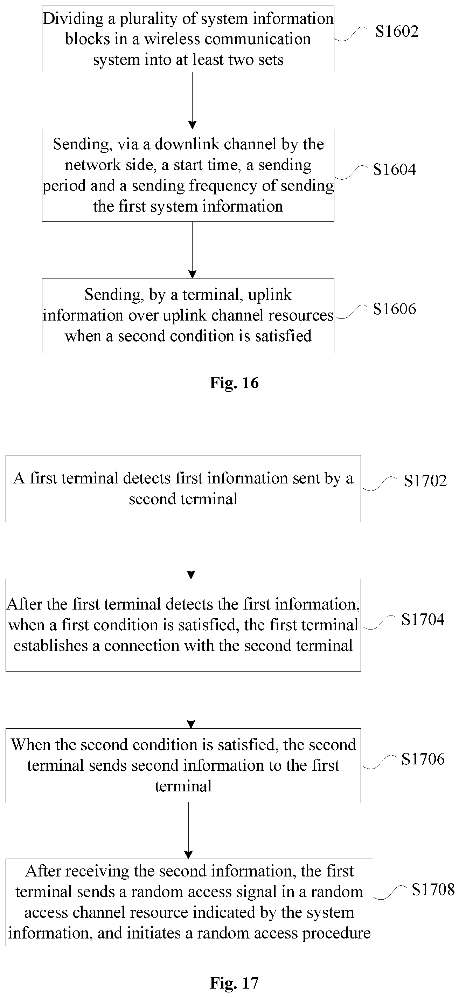

Fig. 16 is a flowchart of a system information sending method according to a scenario-based embodiment of the present disclosure. As shown in Fig. 16, the method includes the following operations S1602 to S1606.

In operation S1602, a plurality of system information blocks in a wireless communication system are divided into at least two sets.

In the wireless communication system, system information is composed of a plurality of system information blocks, and the plurality of system information blocks are divided into at least two sets. System information blocks (namely, basic system information blocks, including some common configuration information in the system) in the set 1 of the at least two sets are sent in a periodic manner, and the sending period thereof is configured by a network side or is configured by default. System information blocks (e.g., system information blocks including system information specific to different types of terminals) in other sets of the at least two sets are sent in the following manner, i.e., when a first condition is satisfied, a network side sends first system information to a terminal via a downlink channel, wherein the first condition includes at least one of following conditions:
the network side detects uplink information sent by the terminal on an uplink channel;
the network side detects, on an uplink channel, that a measurement result corresponding to the uplink information sent by the terminal is greater than or equal to a threshold, wherein the measurement result includes a Reference Signal Receiving Power (RSRP), a Reference Signal Receiving Quality (RSRQ), a Received Signal Strength Indicator (RSSI), a Signal to Noise Ratio (SNR), etc.;
the network side receives first system information sending request information sent by the terminal.

The first system information is information from a first system information block set, wherein the first system information block set is obtained at least from the system information blocks in the above-mentioned other sets, and the first system information block set may further include system information blocks in the set 1. Further, the first system information block set is divided into one or more subsets, and the first system information is at least one subset of the one or more subsets. Further, the subset division mode of the first system information block set may be based on information such as a terminal type and a service type applied for by the terminal. Further, the subset division mode of the first system information block set may be sent from the network side to the terminal or stored in the terminal as a default configuration.

There is a mapping relationship between an uplink channel resource (the uplink channel resource at least includes a time-frequency resource, and when uplink information sent on an uplink channel is a reference sequence, the uplink channel resource further includes reference sequence information) and a subset of the first system information block set. For example, M (M being greater than or equal to 1) subsets of the first system information block sets may be configured with N (N being greater than or equal to 1) groups of uplink channel resources, in other words, a terminal requesting the M subsets of the first system information block set can perform transmission on the N groups of uplink channel resources.

There is a mapping relationship between a downlink channel resource and a subset of the first system information block set. For example, M (M being greater than or equal to 1) subsets of the first system information block set may be configured with K (N being greater than or equal to 1) groups of downlink channel resources, in other words, a terminal requesting the M subsets of the first system information block set may all receive corresponding first system information on the K groups of downlink channel resources.

In operation S1604, a start time, a sending period and a sending frequency of sending the first system information are also sent by the network side via a downlink channel.

In operation S 1606, a terminal sends uplink information over uplink channel resources when a second condition is satisfied. The second condition includes at least one of following conditions:
the terminal does not receive system information required by the type of the terminal;
the terminal does not receive the system information required by the terminal and sent from the network side in a time window after sending the uplink information on the uplink channel, wherein the length of the time window may be configured by the network side or configured by default, the starting position of the time window may be a time period after the terminal completes sending the uplink information, and the time period may be configured by the network side or configured by default;
after the terminal receives a system information block in the set 1, the system information block in the set 1 does not indicate system information resource configuration information required for the type of the terminal;
the terminal enters a connected mode (e.g., RRC_CONNECTED mode) from an idle mode (e.g., RRC_IDLE mode)
a system update time of the terminal arrives (or referred to as a system update timer expires, that is, the time when the network side needs to send the system information arrives).

The above operations will be described below in conjunction with exemplary embodiments.

In this embodiment, the downlink channel in operation S1602 is Msg2 in a random access procedure, and the uplink channel is the Msg1 in the random access procedure.

In this embodiment, there is a mapping relationship between random access resources (including Random Access Channel (e.g., PRACH) time-frequency resources and random access sequence (preamble) resources) and the set of system information blocks required by different types of terminals. A terminal selects a corresponding PRACH resource and a corresponding preamble according to the set of system information blocks required for the type of this terminal. Then, the terminal sends a random access signal. After receiving the random access signal, the network side carries the system information required by the terminal in the Msg2. The system information at least includes: a system bandwidth; a system operating frequency point; a sub-carrier spacing used by the system.

### Scenario-based embodiment 3

Fig. 17 is a flowchart of a terminal-assisted system access method according to a scenario-based embodiment of the present disclosure. As shown in Fig. 17, the method includes the following operations S1702 to S 1708.

In operation S 1702, a first terminal detects first information sent by a second terminal, wherein the first information includes at least one of: information for other terminals to detect existence of the second terminal; whether the second terminal allows other terminals to establish a connection with the second terminal; whether the second terminal has accessed a wireless communication system.

In operation S1704, after the first terminal detects the first information, when a first condition is satisfied, the first terminal establishes a connection with the second terminal. The first condition is at least one of following conditions:
An RSRP/RSRQ/RSSI/SNR obtained by detecting the first information is greater than or equal to a threshold, wherein the threshold is configured by the first terminal; the second terminal is a terminal that has accessed the wireless communication system.

In operation S1706, when the second condition is satisfied, the second terminal sends second information to the first terminal. The second condition includes: identification information of the first terminal has been authenticated/authorized by the wireless communication system; the wireless communication system allows the second terminal to send a part or all of system information of the wireless communication system for the first terminal.

The second information includes a part or all of system information of the wireless communication system accessed by the second terminal; timing advance information of the second terminal in the wireless communication system; distance information of the second terminal from a TRP; transmitting power information of the second terminal; identity authentication information of the second terminal in the wireless communication system.

In operation S1708, after receiving the second information, the first terminal sends a random access signal in a random access channel resource indicated by the system information, and initiates a random access procedure.

### Scenario-based embodiment 4

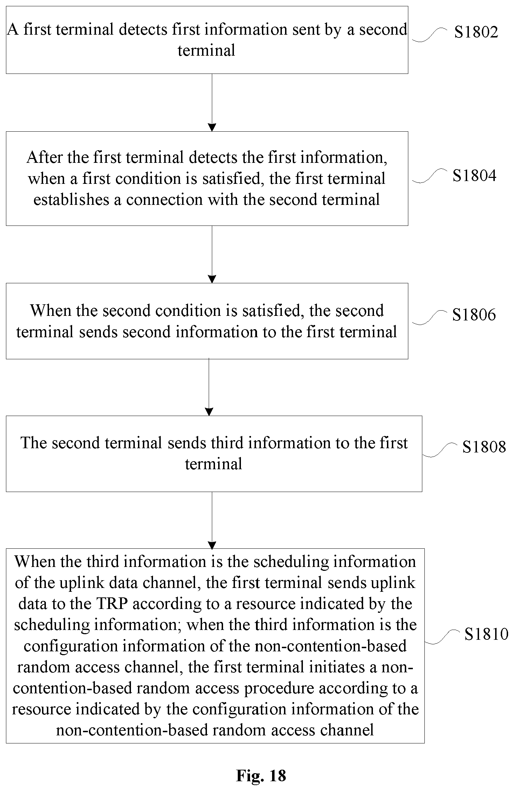

Fig. 18 is a flowchart of a terminal-assisted system access method according to a scenario-based embodiment of the present disclosure. As shown in Fig. 18, the method includes the following operations S1802 to S1810.

The operations S1802-S1806 are the same as the operations S 1702-S1706, and are not further described herein.

In operation S1808, the second terminal sends third information to the first terminal. The third information includes at least one of: scheduling information of an uplink data channel; configuration information of a non-contention-based random access channel.

In operation S1810, when the third information is the scheduling information of the uplink data channel, the first terminal sends uplink data to the TRP according to a resource indicated by the scheduling information, wherein the uplink data includes connection establishment request information; when the third information is the configuration information of the non-contention-based random access channel, the first terminal initiates a non-contention-based random access procedure according to a resource indicated by the configuration information of the non-contention-based random access channel.

The foregoing descriptions are merely embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. A system information sending method, comprising:
dividing system information blocks of a wireless communication system into a first set and at least one second set, wherein the wireless communication system supports multiple different types of networks, the first set comprises one or more basic system information blocks, and the second set comprises at least one of: system information blocks corresponding to at least one type of networks, and system information blocks corresponding to at least one type of second nodes; and
sending, by a first node, first system information to a second node via a downlink channel, wherein the first system information comprises at least one system information block in the second set.

2. The system information sending method according to claim 1, wherein the multiple different types of networks comprise at least one of:
an existing network; and
a customized network.

3. The system information sending method according to claim 1, wherein the sending, by a first node, first system information to a second node via a downlink channel comprises:
sending, by the first node in a case where a first condition is satisfied, the first system information to the second node via the downlink channel, wherein the first condition comprises at least one of following conditions:
the first node detects, on an uplink channel, uplink information sent by the second node;
the first node detects, on an uplink channel, that a measurement result of uplink information sent by the second node is greater than or equal to a threshold;
the first node receives first system information sending request information from the second node.

4. The system information sending method according to claim 3, further comprising:
sending, by the first node to the second node via a downlink channel, at least one of a sending start time, a sending period and a sending frequency of the first system information.

5. The system information sending method according to claim 1, wherein after the sending, by a first node, first system information to a second node via a downlink channel, the system information sending method further comprises:
receiving, by the first node via an uplink channel, uplink information sent by the second node, wherein the uplink information is sent by the second node in a case where a second condition is satisfied, and the second condition at least comprises one of following conditions:
the second node does not receive first system information that matches the second node;
after the second node sends the uplink information, the second node does not receive, within a determined duration, first system information that is sent by the first node and matches the second node;
after the second node receives a basic system information block in the first set, the basic system information block does not indicate transmission resource configuration information corresponding to first system information that matches the second node;
the second node enters a connected mode from an idle mode;
a system resource block updating moment of the second node arrives.

6. The system information sending method according to claim 1, further comprising:
after the second node accesses the wireless communication system according to a basic system information block of the first set, receiving, by the first node, first information reported by the second node.

7. The system information sending method according to claim 6, wherein after the receiving, by the first node, first information reported by the second node, the system information sending method further comprises:
searching, by the first node, a network that matches the second node from the multiple different types of networks according to the first information;
in a case where the network that matches the second node is found, sending configuration information of the network to the second node through the first system information; and
in a case where the network that matches the second node is not found, constructing, by the first node, a customized network that matches the second node.

8. The system information sending method according to claim 7, wherein the first information comprises at least one of:
a service type required by the second node;
a supported function of the first node required by the second node;
hardware configuration information of the second node;
a codec scheme required by the second node;
a receiver detection algorithm required by the second node; and
information of a communication protocol version supported by the second node.

9. The system information sending method according to claim 7, wherein before the constructing, by the first node, a customized network that matches the second node, the system information sending method further comprises:
sending, in a first system by the first node, second information to the second node, wherein the first system is a network indicated according to a basic system information block of the first set; and
receiving, by the first node, response information of the second node for the second information.

10. The system information sending method according to claim 9, wherein the second information comprises at least one of:
indication information of construction of the customized network;
waiting delay information of construction of the customized network; and
payment information of construction of the customized network.

11. A wireless communication system access method, comprising:
receiving, by a first sub-node of a wireless communication system, third information sent by a second sub-node; and
detecting, by the first sub-node, the third information, and in a case where a third condition is satisfied, establishing, by the first sub-node, a connection with the second sub-node.

12. The wireless communication system access method according to claim 11, wherein the third information comprises at least one of:
whether the second sub-node allows other sub-nodes to establish a connection with the second sub-node;
whether the second sub-node has accessed the wireless communication system.

13. The wireless communication system access method according to claim 11, wherein the third condition comprises at least one of following conditions:
a detection result of the third information is greater than or equal to a threshold;
the second sub-node has accessed the wireless communication system.

14. The wireless communication system access method according to claim 11, wherein after the receiving, by a first sub-node of a wireless communication system, third information sent by a second sub-node, the wireless communication system access method further comprises:
detecting, by the first sub-node, the third information, and in a case where a fourth condition is satisfied, receiving, by the first sub-node, fourth information sent by the second sub-node.

15. The wireless communication system access method according to claim 14, wherein the fourth condition comprises at least one of following conditions:
identification information of the first sub-node is authenticated and/or authorized and/or registered through the wireless communication system;
the wireless communication system allows the second sub-node to send a part or all of system information of the wireless communication system to the first sub-node.

16. The wireless communication system access method according to claim 14, wherein the fourth information comprises at least one of:
a part or all of system information of the wireless communication system accessed by the second sub-node;
timing advance information of the second sub-node in the wireless communication system;
distance information between the second sub-node and a first node of the wireless communication system;
transmitting power information of the second sub-node;
identity authentication information of the second sub-node in the wireless communication system.

17. The wireless communication system access method according to claim 14, wherein after the receiving, by the first sub-node, fourth information sent by the second sub-node, the wireless communication system access method further comprises:
initiating, by the first sub-node, a random access procedure according to the fourth information.

18. The wireless communication system access method according to claim 14, wherein after the receiving, by the first sub-node, fourth information sent by the second sub-node, the wireless communication system access method further comprises:
receiving, by the first sub-node, fifth information sent by the second sub-node, and sending, by the first sub-node, uplink information according to the fifth information.

19. The wireless communication system access method according to claim 18, wherein the fifth information comprises at least one of:
uplink channel scheduling information;
configuration information of a non-contention-based random access channel.

20. The wireless communication system access method according to claim 19, wherein the sending, by the first sub-node, uplink information according to the fifth information comprises:
in a case where the fifth information is the uplink channel scheduling information, sending, by the first sub-node, uplink data to a first node of the wireless communication system according to the uplink channel scheduling information; and
in a case where the fifth information is the configuration information of the non-contention-based random access channel, initiating, by the first sub-node, a non-contention-based random access procedure according to the configuration information of the non-contention-based random access channel.

21. A system information sending apparatus, comprising:
a set division module, configured to divide system information blocks of a wireless communication system into a first set and at least one second set, wherein the wireless communication system supports multiple different types of networks, the first set comprises one or more basic system information blocks, and the second set comprises at least one of: system information blocks corresponding to at least one type of networks, and system information blocks corresponding to at least one type of second nodes; and
a sending module, configured to send, by a first node, first system information to a second node via a downlink channel, wherein the first system information comprises at least one system information block in the second set.

22. The system information sending apparatus according to claim 21, further comprising:
a network construction module, configured to construct, by the first node in a case where a network that matches the second node is not found in the multiple different types of networks, a customized network that matches the second node.

23. A wireless communication system access apparatus, comprising:
a reception module, configured to receive third information sent by a second sub-node;
a detection and determination module, configured to detect the third information received by the reception module, determine whether a third condition is satisfied, and send a determination result to a first connection module; and
the first connection module, configured to establish, in a case where the third condition is satisfied, a connection between a first sub-node and the second sub-node according to the determination result of the detection and determination module.

24. The wireless communication system access apparatus according to claim 23, wherein the detection and determination module is further configured to:
detect the third information received by the reception module, and determine whether a fourth condition is satisfied, wherein the reception module is configured to receive, in a case where the fourth condition is satisfied, fourth information sent by the second sub-node.

25. The wireless communication system access apparatus according to claim 24, further comprising:
a first access module, configured to initiate a random access procedure of the first sub-node according to the fourth information.

26. A computer readable storage medium, wherein the computer readable storage medium stores a computer program, and the computer program, when executed by a processor, causes the processor to implement the method according to any one of claims 1 to 20.

27. An electronic apparatus, comprising a memory, a processor, and a computer program that is stored on the memory and is able to run on the processor, wherein the processor is configured to run the computer program to implement the method according to any one of claims 1 to 20.
